# EUROPÄISCHE PATENTSCHRIFT

(11) **EP 4 092 210 B1**
(45) Veröffentlichungstag und Bekanntmachung des Hinweises auf die Patenterteilung: **06.05.2026**
(21) Anmeldenummer: 21175033.6
(22) Anmeldetag: 20.05.2021
(51) Int. Cl.: E04B 1/86, E04F 13/08, A01G 17/08, F16B 15/06, F16B 1/00, F16B 5/00, E04B 1/82, F16B 15/00, E04B 9/34

(54) **SCHALLSCHUTZSYSTEM**
SOUND INSULATION SYSTEM
SYSTÈME D'ISOLATION ACOUSTIQUE

(43) Veröffentlichungstag der Anmeldung: 23.11.2022
(73) Patentinhaber: MM Infra GmbH & Co. KG, 52249 Eschweiler (DE)
(72) Erfinder: Mathey, Michael, 52249 Eschweiler (DE)
(74) Vertreter: Kohlmann, Kai

(56) Entgegenhaltungen:
- CN-A- 112 459 272
- DE-U1- 202016 101 469
- DE-U1- 202018 006 158
- DE-U1- 8 528 563
- KR-A- 20130 042 394
- US-A1- 2018 073 252
- US-A1- 2019 345 723

## Beschreibung

Die Erfindung betrifft ein Schallschutzsystem umfassend einen Schallabsorber aus zelligem elastomeren Schaumstoff und mindestens ein Befestigungsmittel, für das Aufhängen des Schallabsorbers aus zelligem elastomeren Schaumstoff.

Schallabsorber aus zelligem elastomeren Schaumstoff sind beispielsweise aus der EP 2 180 109 A2 bekannt. Die Schallabsorber dienen bei hängender Anordnung an einer Raumdecke der Schallabsorption. Zur Schallabsorption kommen insbesondere im Querschnitt lang gestreckte, rechteckige Schaumstoffteile zum Einsatz, die in parallelen Reihen zueinander angeordnet sind. Jedes Schaumstoffteil weist einen lang gestreckt rechteckigen Querschnitt auf, wobei der längere Schenkel des Querschnitts die senkrecht zur Raumdecke betrachtete Höhe des Schaumstoffteils definiert. Zur Befestigung der Schaumstoffteile sind an der Raumdecke Befestigungsschienen montiert, die einen U-Querschnitt aufweisen. Der die U-Stege verbindende U-Schenkel dient zur Festlegung der Befestigungsschiene an der Raumdecke. Die parallel zueinander verlaufenden U-Stege sind mit einem dem Dickenmaß des Schaumstoffteils entsprechenden Maß zueinander beabstandet, so dass nach einem Einstecken des Schaumstoffteils in die Befestigungsschiene das Schaumstoffteil mittels der U-Stege der Befestigungsschiene klemmgehaltert ist.

Die DE 200 11 448 U1 offenbart ein Schallabsorbersystem umfassend mehrere Schallabsorber, die an mindestens einem im Raum aufgespannten Seil aufgehängt sind. Als Befestigungsmittel für die Schallabsorber kommen Spiralfedern mit einem endseitig ausgebildeten Haken zum Einsatz. Diese Befestigung von Schallabsorbern aus zelligem elastomeren Schaumstoff weist jedoch eine Reihe von Nachteilen auf. Insbesondere ist eine exakte Montage der Spiralfeder in den Schallabsorbern aufgrund des helixförmigen Eindringens problematisch. Es besteht die Gefahr, dass die Spiralfeder beim Einschrauben in den Schaumstoff aus einer vorgegebenen Achse herausläuft. Die Ausrichtung der Spiralfeder bei im Übrigen baugleichen Absorbern, die in das Seil eingehängt werden, kann daher divergieren. Infolgedessen offenbart die DE 200 11 448 U1 ausschließlich, dass die Spiralfedern an der zur Decke weisenden Stirnseite des Schallabsorbers montiert werden und dadurch dem Blick des Betrachters, insbesondere bei nicht exakter Montage entzogen sind. Höhenunterschiede der aufgehängten Schallabsorber lassen sich mit den bekannten Befestigungsmitteln nicht vermeiden.

Aus der EP 2 910 800 B1 ist ein Befestigungsmittel für das Aufhängen von Schallabsorbern aus zelligem elastomeren Schaumstoff bekannt, wobei das Befestigungsmittel einen zylindrischen Schaft zur Verankerung des Befestigungsmittels in dem zelligen elastomeren Schaumstoff des Schallabsorbers aufweist, der Schaft sich an einem Ende kegelförmig in Richtung einer Eintreibspitze verjüngt. Das Befestigungsmittel weist einen Halteabschnitt zum Aufhängen des Schallabsorbers auf, der an dem anderen Ende des Schaftes angeordnet ist, wobei zwischen dem Schaft und dem Halteabschnitt ein Anschlag angeordnet ist, der an der Oberfläche des Schallabsorbers zur Anlage bringbar ist und sich mindestens eine Finne parallel zur Längsachse des Schafts radial über dessen Mantelfläche hinaus nach außen erstreckt. Ferner offenbart die EP 2 910 800 B1 Schallabsorbersysteme unter Verwendung des Befestigungsmittels.

Die KR 2013 0042394 A offenbart ein Wandbefestigungssystem umfassend ein Befestigungsmittel zum Befestigen einer Außenlage an einer Wand, wobei zwischen Außenlage und Wand eine Zwischenlage, beispielsweise eine Isolation angeordnet ist. Das Befestigungsmittel weist einen Halteabschnitt mit einem Schraubenklemmteil auf, in den eine Wandfixiereinheit einschraubbar ist. An dem Halteabschnitt des Befestigungsmittels können Permanentmagnete angeklebt sein Die Wandfixiereinheit weist stirnseitig eine zylindrisches, an der Vorderseite stumpfes Wand-Einsetz-Teil auf, das in ein Bohrloch in der Wand eingetrieben wird. Das Wand-Einsetzteil weist gegenüber dem Bohrloch ein geringfügiges Übermass aufweist und wird dadurch in dem Bohrloch in der Wand fixiert.

Die US 2018/073252 A1 offenbart eine Magnethalterung umfassend eine Schraube mit einem Schraubenkopf und einem Schaft mit Schraubgewinde, das in einen Dübel einschraubbar ist. Ein ringförmiger Permanentmagnet umgibt den Schraubenschaft als Abstandshalter und hält eine metallische Oberfläche nach dem Einschrauben der Schraube.

Die US 2019/345723 A1 offenbart eine Magnetbefestigung zur Befestigung von magnetisierbaren Gegenständen an einer Wandtafel. Die Magnetbefestigung umfasst eine Gewindeschraube mit einem Schraubenkopf und einen Befestigungskörper, der an der nach außen weisenden Seite mit einem Fugenband für Wandplatten versehen ist und im Übrigen aus einem magnetischen Material besteht.

Die DE 20 2018 006 158 U1 offenbart einen Magnethalter zur lösbaren Halterung von Kunststoffbehältern an einer metallischen Haltefläche. Der Magnethalter weist einen scheibenförmigen Grundkörper auf, auf dessen Vorderseite eine Haltevorrichtung mit einem Schaft und einer kegelförmigen Spitze vorsteht. Der Grundkörper ist ein Dauermagnet, und die Haltefläche besteht aus magnetischem Material. Zur Halterung des Kunststoffbehälters an der magnetisierbaren Haltefläche wird die kegelförmige Spitze der Haltevorrichtung durch die Wand des Kunststoffbehälters gedrückt, wobei die Spitze vollständig in das Innere des Kunststoffbehälters eindringt.

DE 20 2016 101469 U1 offenbart ein gattungsgemäßes Schallschutzsystem.

Ausgehend von diesem Stand der Technik liegt der Erfindung die Aufgabe zu Grunde, ein Schallschutzsystem unter Verwendung eines Befestigungsmittels und einer Platte mit einer metallischen Oberfläche vorzuschlagen, das eine einfache Befestigung von selbsttragenden Schallabsorbern aus zelligem elastomeren Schaumstoff in einem geringem Abstand an der metallischen Fläche ermöglicht. Das Befestigungsmittel für das Aufhängen der selbsttragenden Schallabsorber aus zelligem elastomeren Schaumstoff soll eine einfache Befestigung der Schallabsorber an der metallischen Fläche und in einem geringem Abstand zu der Fläche ermöglichen, wobei der Schaumstoff beim Eintreiben des Befestigungsmittels nur minimal verletzt wird, so dass nahezu die gesamte Rückstellkraft des weitgehend unbeschädigten zelligen elastomeren Schaumstoffs eine Klemmwirkung auf den Schaft des Befestigungsmittels ausübt, und zugleich eine dauerhafte, hoch belastbare Verbindung zwischen dem Befestigungsmittel und dem Schaumstoff bewirkt wird.

Diese Aufgabe wird durch ein Schallschutzsystem mit den Merkmalen des unabhängigen Anspruchs 1 gelöst. Vorteilhafte Ausgestaltungen der Erfindung ergeben sich aus den Merkmalen der Unteransprüche.

Der Schaft des Befestigungsmittels verjüngt sich an einem Ende, insbesondere kegelförmig in Richtung einer Eintreibspitze. Aufgrund der Verjüngung wird der Schaumstoff beim Eintreiben des Befestigungsmittels nur minimal verletzt. Nahezu die gesamte Rückstellkraft des weitgehend unbeschädigten zelligen elastomeren Schaumstoffs übt eine Klemmwirkung auf den Schaft des Befestigungsmittels aus.

Im Interesse einer möglichst geringen Verletzung des zelligen elastomeren Schaumstoffs beim Eintreiben des Befestigungsmittels ist der Öffnungswinkel des die Eintreibspitze umfassenden Kegels ein spitzer Winkel.

Erfindungsgemäß weist das Befestigungsmittel einen Halteabschnitt zum Befestigen des Schallabsorbers an einer metallischen Oberfläche auf, der an dem anderen Ende des Schaftes angeordnet ist, wobei
- der Halteabschnitt eine Anschlagfläche aufweist, die an der Oberfläche des Schallabsorbers zur Anlage bringbar ist,
- der Halteabschnitt eine Befestigungsfläche aufweist, die an einer metallischen Oberfläche zur Anlage bringbar ist,
- und zumindest ein die Befestigungsfläche aufweisender Teil des Halteabschnitts als Permanentmagnet ausgebildet ist.

Konstruktiv vorteilhaft ist jedoch der gesamte Halteabschnitt als Permanentmagnet ausgebildet und weist insbesondere die Form eines Kreiszylinders auf, dessen eine Stirnfläche die Anschlagfläche und dessen andere Stirnfläche die Befestigungsfläche bildet. Um den Abstand zwischen dem Schallabsorber und der metallischen Oberfläche gering zu halten, ist die Längserstreckung zwischen den beiden Stirnflächen des Kreiszylinders kleiner als der Durchmesser der Stirnflächen.

Der Schallabsorber lässt sich mit dem Befestigungsmittel problemlos an beliebigen Stellen metallischer Oberflächen befestigen, beispielsweise an metallischen Einhausungen, Trägerkonstruktionen oder metallischen Wänden und Decken von Hallen in industriellen Umgebungen.

Der in den Halteabschnitt des Befestigungsmittels integrierte Permanentmagnet wird nach Art eines Haltemagneten genutzt, um den Schallabsorber nahezu oberflächenbündig an der metallischen Oberfläche zu befestigen.

Die an der Oberfläche des Absorbers aus zelligem elastomeren Schaumstoff zur Anlage bringbare Anschlagfläche des Halteabschnitts begrenzt den Eindringweg des Befestigungsmittels in den zelligen elastomeren Schaumstoff und trägt zur genauen und wiederholbaren Positionierung jedes Befestigungsmittels in den Schallabsorbern bei. In Verbindung mit einem geradlinigen Eintreibweg des zylindrischen Schafts in den zelligen elastomeren Schaumstoff lässt sich eine stets gleiche, exakte Positionierung sämtlicher Befestigungsmittel in den Schallabsorbern gewährleisten.

Der Permanentmagnet kann aus einer metallischen Legierung aus Eisen, Nickel und Aluminium mit Zusätzen aus Cobalt, Mangan und Kupfer oder auch keramischen Werkstoffen (Barium- bzw. Strontiumhexaferrit) bestehen. Werden besonders hohe Haltekräfte für große Schallabsorber benötigt, kann der Permanentmagnet im Sinterverfahren aus seltenen Erden hergestellt werden, wie zum Beispiel Samarium-Cobalt oder Neodym-Eisen-Bor.

Zur Verbesserung der Verankerung des zylindrischen Schafts des Befestigungsmittels in dem zelligen Schaumstoff kann der Schaft in einer vorteilhaften Ausgestaltung der Erfindung eine reibungserhöhende Verankerungsstruktur aufweisen, beispielsweise eine Sägezahnstruktur.

Zur weiteren Verbesserung der Verankerung oder alternativ können über den Umfang des Schaftes mehrere als Nut ausgebildete Vertiefungen angeordnet sein. Der Schaumstoff setzt sich in diese Vertiefung(en) und sorgt hierdurch für eine zusätzliche Verankerung des Befestigungsmittels in dem zelligen Schaumstoff. Der Querschnitt der Nut weist vorzugsweise die Form eines Kreissektors auf. Diese Querschnittsform begünstigt, dass der Schaumstoff die Nut vollständig ausfüllt und das Befestigungsmittel zusätzlich in dem Schaumstoff verankert. In Betracht kommen jedoch auch grundsätzlich anders geformte Nutquerschnitte, insbesondere ein rechteckiger Querschnitt.

Die Verankerung kann zusätzlich oder alternativ durch mindestens eine den Schaft umgebende, mit diesem stoffschlüssig verbundene Ringwulst verbessert werden.

Gemäß der Erfindung ist der Schaft des Befestigungsmittels nicht nur mechanisch durch die Rückstellkräfte des Schaumstoffs, sondern darüber hinaus stoffschlüssig mit dem Schaumstoff verbunden, indem zumindest ein Teilbereich des Schafts mit einem Klebstoffauftrag versehen ist.

Der Klebstoffauftrag bewirkt nach dem Abbinden bzw. Aushärten eine dauerhafte, hoch belastbare Verbindung zwischen dem Befestigungsmittel und dem Schaumstoff. Der Klebstoffauftrag umfasst beispielsweise einen physikalisch abbindenden oder einen chemisch härtenden Klebstoff.

Der physikalisch abbindende Klebstoff wird als fertiger Klebstoff gezielt auf den Schaft aufgebracht. In Betracht kommt beispielsweise ein lösemittelhaltiger Klebstoff. Das Polymer liegt in organischen Lösemitteln gelöst vor und wird in dieser Form auf dem Schaft appliziert. Das Einbringen des Befestigungsmittels und das Fügen mit dem Schaumstoff findet zu einem Zeitpunkt statt, bei dem noch genügend Lösemittel in dem Klebstoffauftrag vorhanden ist, um eine Benetzung der Oberfläche des Schaumstoffs zu gewährleisten. Durch Verdunsten der Lösemittel bindet der Klebstoff ab.

Kommt ein chemisch härtender Klebstoff zum Einsatz, müssen die einzelnen chemischen Bausteine des Klebstoffs auf den Schaft aufgebracht werden. Die Verfestigung wird durch chemische Reaktion der Bausteine miteinander erreicht. In Betracht kommen sowohl 2-Komponenten-Klebstoffe als auch 1-Komponenten-Klebstoffe.

Eine der beiden Komponenten des 2K- Klebstoffs enthält den Binder, während die andere Komponente den Härter enthält. Die beiden Komponenten werden vor dem Aufbringen auf dem Schaft im vorgeschriebenen Verhältnis vermischt. Mit dem Kontakt von Binder und Härter startet die chemische Reaktion zum Klebstoffpolymer. Dies bedingt, dass das Aufbringen des Klebstoffs und das Einbringen des mit dem Klebstoffauftrag versehenen Schafts in den Schaumstoff innerhalb der sogenannten Topfzeit erfolgen müssen. Nach Überschreiten der Topfzeit (offenen Zeit) lassen sich die zu verbindenden Oberflächen von Schaft und Schaumstoff nicht mehr benetzen.

Bei 1-Komponenten-Klebstoffen wird der gebrauchsfertige Klebstoff direkt auf den Schaft aufgebracht. Der Klebstoff härtet dann durch Veränderung der Umgebungsbedingungen aus, beispielsweise durch den Kontakt mit dem Schaumstoff.

Alternativ kann der Klebstoffauftrag einen Haftklebstoff umfassen. Der aufgebrachte Haftklebstoff bleibt hochviskos und dauerklebrig. Durch das Einbringen in den Schaumstoff haftet das Befestigungsmittel dort an. Ein wesentlicher Anwendungsvorteil des Haftklebstoffs besteht darin, dass das Befestigungsmittel mit bereits angebrachtem Klebstoffauftrag dauerhaft gelagert werden kann. Der Anwender muss vor dem Einbringen des Befestigungsmittels deshalb keinerlei Maßnahmen ergreifen.

Besonders bevorzugt handelt es sich bei dem Klebstoffauftrag um einen Schmelzklebstoff, auch als Hotmelt bezeichnet, der im heißen Zustand auf den Schaft des Befestigungsmittels aufgebracht und eingetrieben wird und beim Abkühlen eine außerordentlich feste Verbindung mit der zelligen Struktur des Schaumstoffs herstellt.

Um den Schaumstoff an der Eintrittsstelle des Befestigungsmittels zu stabilisieren, erstreckt sich der Klebstoffauftrag von der Anschlagfläche ausgehend in Richtung der Eintreibspitze vorzugsweise über eine Teillänge, beispielsweise die halbe Länge des Schafts. Wird der Klebstoff indes lediglich punktuell aufgebracht, erfolgt der Klebstoffauftrag in einem Abstand von der Anschlagfläche, der beispielsweise etwa ein Drittel der Länge des Schafts beträgt.

Um die Hebelkräfte durch den Schaft des Befestigungsmittels in dem zelligen elastomeren Schaumstoff des Schallabsorbers zu reduzieren, ist in vorteilhafter Ausgestaltung der Erfindung die Längserstreckung des Schaftes größer als die Längserstreckung des Halteabschnitts. Insbesondere weist der Schaft eine Mindestlänge von 30 mm auf.

Um das Schallschutzsystem an nicht metallischen Oberflächen, insbesondere Wand- oder Deckenflächen von Gebäuden, montieren zu können, umfasst das Schallschutzsystem außerdem eine Platte mit einer metallischen Oberfläche, an der die Befestigungsfläche des Halteabschnitts des Befestigungsmittels zur Anlage bringbar ist. Die Platte kann beispielsweise mittels einer Schraubverbindung an der nicht metallischen Oberfläche befestigt sein.

Die Platte mit metallischer Oberfläche kann eine Lochscheibe sein, die mittels einer mit der Oberfläche der Lochscheibe bündig abschließenden Schraube an der Wand - oder Deckenfläche befestigt wird. Die Schraubbefestigung erfolgt insbesondere mit Hilfe eines in die Wand- oder Deckenfläche eingelassen Dübels.

Ein erfindungsgemäßes Schallschutzsystem umfasst vorzugsweise mehrere, vorzugsweise baugleiche Schallabsorber aus zelligem elastomeren Schaumstoff, wobei in jeden Schallabsorber mindestens ein erfindungsgemäßes Befestigungsmittel eingebracht ist.

Die Schallabsorber sind vorzugsweise zylindrisch ausgebildet und weisen eine Grund- und Deckfläche mit rundem, ovalem oder rechteckigem Querschnitt auf. Die ebenen Grund- und Deckflächen der zylindrischen Schallabsorber erlauben eine exakte Anlage der Anschlagfläche jedes Befestigungsmittels.

Ein erfindungsgemäßes Schallschutzsystem lässt sich preiswert ausführen, wenn jeder Schallabsorber ausschließlich aus einem offenzelligen oder geschlossenzelligen elastomeren Schaumstoff besteht. Die rahmenlosen, formstabilen Schallabsorber werden durch die Befestigungsmittel an der metallischen Oberfläche bzw. Platte gehaltert.

Der zellige elastomere Schaumstoff des Schallabsorbers vermindert die Schallenergie durch Umwandlung in Wärme. Durch die rahmenlose Bauweise steht nahezu die vollständige Oberfläche des Schallabsorbers für die Schallabsorption zur Verfügung.

Als zellige elastomere Schaumstoffe kommen insbesondere so genannte Akustikschäume mit einem hohen Schallabsorptionsgrad in Betracht. Vorzugsweise handelt es sich um einen Melaninharzschaumstoff oder einen PUR-Schaumstoff. Die für die Formstabilität der rahmenlosen Schallabsorber maßgebliche Stauchhärte 40 % wird nach DIN 53577 bestimmt. Die Stauchhärte bzw. Festigkeit des Schaumstoffs ist darüber hinaus für die gute Klemmung der eingetriebenen Befestigungsmittel in dem Schallabsorber verantwortlich. Der Schallabsorber aus Melaminharzschaumstoff weist beispielsweise eine Stauchhärte im Bereich von 4 kPa bis 11 kPa auf. Der Schallabsorber aus PUR-Schaumstoff weist beispielsweise einer Stauchhärte im Bereich von 1 kPa bis 14 kPa auf.

Die erfindungsgemäßen Befestigungselemente bestehen vorzugsweise aus dem Permanentmagneten und metallischen Werkstoffen, wie insbesondere Stahl, Edelstahl, Messing und anderen Buntmetalllegierungen. Grundsätzlich kommen jedoch auch Kunststoff oder Verbundmaterialien in Betracht.

Nachfolgend wird die Erfindung anhand der Zeichnungen näher erläutert. Es zeigen:
- **Figuren 1 A-C**: drei unterschiedliche Ausführungsformen eines erfindungsgemäßen Befestigungsmittels für das Aufhängen von Schallabsorbern sowie
- **Figuren 2 A-C**: drei unterschiedliche Ausführungsformen eines Befestigungssystems umfassend die Befestigungsmittel nach Figuren 1 A-C.

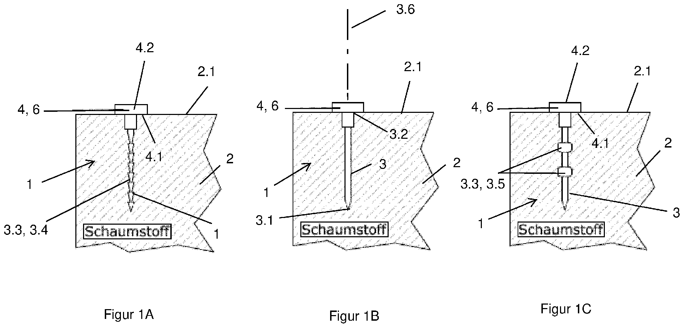

Figuren 1A, 1B, 1C zeigen unterschiedliche Ausführungsformen eines erfindungsgemäßen Befestigungsmittels (1) für das Aufhängen von Schallabsorbern (2) aus zelligem elastomeren Schaumstoff. Das Befestigungsmittel (1) weist einen Schaft (3) auf, der zur Verankerung des Befestigungsmittels (1) in dem zelligen elastomeren Schaumstoff des Schallabsorbers eingerichtet ist. Der Schaft (3) verjüngt sich am Ende kegelförmig in Richtung einer Eintreibspitze (3.1). Die Eintreibspitze bewirkt, dass der Schaumstoff beim Eintreiben des Befestigungsmittels (1) nur minimal verletzt wird.

Das Befestigungsmittel (1) weist an dem anderen Ende (3.2) des Schaftes (3) einen Halteabschnitt (4) zum Befestigen des Schallabsorbers (2) an einer metallischen Oberfläche (5) auf.

Der stoffschlüssig mit dem Schaft (3) verbundene Halteabschnitt (4) weist eine Anschlagfläche (4.1) auf, die an der Oberfläche (2.1) des Schallabsorbers (2) anliegt, wenn das Befestigungsmittel (1) in den zelligen elastomeren Schaumstoff eingetrieben ist. In parallelem Abstand zu der Anschlagfläche (4.1) weist der Halteabschnitt (4) eine Befestigungsfläche (4.2) auf, die an der metallischen Oberfläche (5) anliegt. Zumindest der die Befestigungsfläche (4.2) aufweisende Teil des Halteabschnitts (4) ist als Permanentmagnet (6) ausgebildet. In dem dargestellten Ausführungsbeispiel ist der gesamte, stirnseitig durch die Anschlagfläche (4.1) und Befestigungsfläche (4.2) begrenzte Halteabschnitt (4) als Permanentmagnet (6) ausgebildet.

Die Schäfte (3) sämtlicher in den Figuren 1A, 1B, 1C dargestellter Befestigungsmittel (1) sind zumindest teilweise mit einem Klebstoffauftrag versehen, um einen sicheren Halt des Befestigungsmittels (1) nach dem Eintreiben in dem zelligen, elastomeren Schaumstoff zu gewährleisten. Der Klebstoffauftrag erstreckt sich ausgehend von der Anschlagsfläche (4.1) in Richtung der Eintreibspitze (3.1) über eine Teillänge, beispielsweise die halbe Länge des Schafts (3). Alternativ kann der Klebstoff lediglich punktuell aufgebracht werden.

Aufgrund des Klebstoffauftrages ist es zur sicheren Verankerung des Befestigungsmittels (1) grundsätzlich ausreichend, dass der Schaft (3), wie in Figur 1B dargestellt, eine kreiszylindrische längliche Form aufweist. Die gesamte Rückstellkraft des elastomeren Schaumstoffs übt eine Klemmwirkung auf den Schaft (3) des Befestigungsmittels (1) aus. Zugleich stellt der Klebstoffauftrag auf dem Schaft (3) nach dem Abbinden bzw. Aushärten eine dauerhafte, belastbare Verbindung zwischen dem Befestigungsmittel (1) und dem Schaumstoff her.

Um die Verankerung des Befestigungsmittels (1), insbesondere bei größeren Schallabsorbern (2) weiter zu verbessern, kann der Schaft (3) zusätzlich zumindest abschnittsweise eine Verankerungsstruktur (3.3) aufweisen, wie sie in den Ausführungsbeispielen nach Figuren 1A und 1C erkennbar ist.

In Figur 1A ist die Verankerungsstruktur (3.3) als Sägezahnstruktur (3.4) ausgebildet, die nach Art von Widerhaken ein Herausziehen des Befestigungsmittels (1) entgegen der Eintreibrichtung wirksam verhindern. Die Ausführungsform des Befestigungsmittels (1) nach Figur 1C umfasst als Verankerungsstruktur (3.3) den Schaft (3) umgebende Ringwülste (3.5). Insbesondere bei den Ausführungsformen nach Figuren 1A, 1C mit einer Verankerungsstruktur (3.3) kann je nach Gewicht und Größe des Schallabsorbers (2) von einem Klebstoffauftrag abgesehen werden.

In sämtlichen Ausführungsbeispielen nach Figuren 1A, 1B, 1C ist die Längsachse (3.6) des Schafts (3) jedes Befestigungsmittels (1) senkrecht zu der Oberfläche (2.1) des Schallabsorbers (2) angeordnet. Der Schaft (3) erstreckt sich über eine Länge von mindestens 30 mm in den Schallabsorber (2) hinein, um etwaige über den Halteabschnitt (4) eingeleitete Kräfte sicher abzustützen.

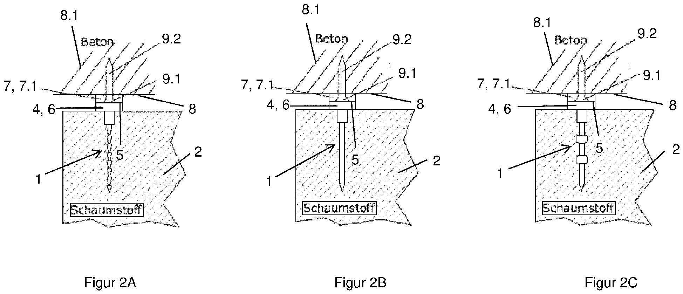

Das erfindungsgemäße Befestigungsmittel (1) für einen Schallabsorber (2) ist Bestandteil eines Befestigungssystems (vgl. Figuren 2A, 2B, 2C), welches das Befestigungsmittel (1) sowie eine Platte (7) mit einer metallischen Oberfläche aufweist, an der die Befestigungsfläche (4.2) des Halteabschnitts (4) zur Anlage bringbar ist. Aufgrund des Permanentmagneten (6) wird der Schallabsorber (2) hierdurch wirksam an der metallischen Oberfläche (7) befestigt. Die metallische Oberfläche (7) kann beispielsweise eine Begrenzungsfläche einer metallischen Einhausung, eine metallische Wand oder Decke einer Halle im industriellen Umfeld sein.

Sofern die Schallabsorber an nicht metallischen Oberflächen fixiert werden sollen, umfasst das Befestigungssystem mindestens eine Platte (7), die für eine Befestigung an der nicht metallischen Oberfläche (8), beispielsweise aus Beton, mittels einer Schraubverbindung (9) eingerichtet ist. Die Platte (7) ist beispielsweise als metallische Lochscheibe (7.1) ausgebildet.

Sofern zur Befestigung des Schallabsorbers (2) mehrere Befestigungsmittel (1) erforderlich sind, ist vorzugsweise jedem Halteabschnitt (4) eines der Befestigungsmittel (1) eine Lochscheibe (7.1) zugeordnet. Die Befestigung der Lochscheiben (7.1) an der nicht metallischen Oberfläche, beispielsweise einer Wand aus Beton (8.1), erfolgt mittels einer das Loch der Lochscheibe (7.1) durchsetzenden, bündig mit deren Oberfläche abschließenden Senkkopfschraube (9.1), die in einen zuvor in die Wand (8.1) eingebrachten Dübel (9.2) eingeschraubt wird.

Durch Anschrauben der metallischen Platten (7) in Form der Lochscheibe (7.1) lässt sich mit Hilfe der erfindungsgemäßen Befestigungsmittel ein Schallschutzsystem nicht nur unproblematisch an metallischen, großflächigen Oberflächen, sondern auch an Wänden mit nicht metallischen Oberflächen (8) realisieren.

### Bezugszeichenliste

| **Nr.** | **Bezeichnung** |
|---|---|
| 1. | Befestigungsmittel |
| 2. | Schallabsorber |
| 2.1 | Oberfläche |
| 3. | Schaft |
| 3.1 | Eintreibspitze |
| 3.2 | Ende |
| 3.3 | Verankerungsstruktur |
| 3.4 | Sägezahnstruktur |
| 3.5 | Ringwulst |
| 3.6 | Längsachse |
| 4. | Halteabschnitt |
| 4.1 | Anschlagsfläche |
| 4.2 | Befestigungsfläche |
| 5. | Metallische Oberfläche |
| 6. | Permanentmagnet |
| 7. | Platte |
| 7.1 | Lochscheibe |
| 8. | Oberfläche nicht metallisch |
| 8.1 | Wand |
| 9. | Schraubverbindung |
| 9.1 | Senkkopfschraube |
| 9.2 | Dübel |

## Patentansprüche

1. Schallschutzsystem umfassend einen
- Schallabsorber (2) aus zelligem elastomeren Schaumstoff und
- mindestens ein Befestigungsmittel (1), für das Aufhängen des Schallabsorbers (2) aus zelligem elastomeren Schaumstoff, wobei
- jedes Befestigungsmittel (1) einen Schaft (3) aufweist, der zur Verankerung des Befestigungsmittels (1) in dem zelligen elastomeren Schaumstoff des Schallabsorbers (2) eingerichtet ist,
- der Schaft (3) sich an einem Ende in Richtung einer Eintreibspitze (3.1) verjüngt und der Öffnungswinkel des die Eintreibspitze (3.1) umfassenden Kegels ein spitzer Winkel ist,
- zumindest ein Teilbereich des Schafts (3) mit einem Klebstoffauftrag versehen ist,
- das Befestigungsmittel (1) einen Halteabschnitt (4) zum Befestigen des Schallabsorbers (2) an einer metallischen Oberfläche aufweist, der an dem anderen Ende (3.2) des Schaftes (3) angeordnet ist,
- der Halteabschnitt (4) eine Anschlagfläche (4.1) aufweist, die an der Oberfläche (2.1) des Schallabsorbers (2) zur Anlage bringbar ist,
- der Halteabschnitt (4) eine Befestigungsfläche (4.2) aufweist, die an der metallischen Oberfläche zur Anlage bringbar ist und zumindest ein die Befestigungsfläche (4.2) aufweisender Teil des Halteabschnitts (4) als Permanentmagnet (6) ausgebildet ist,
- der Schaft (3) zur Verankerung des Befestigungsmittels (1) in den zelligen elastomeren Schaumstoff des Schallabsorbers (2) soweit eingebracht ist, dass die Anschlagfläche (4.1) des Halteabschnitts (4) an der Oberfläche (2.1) des Schallabsorbers (2) anliegt,
- eine Platte (7) mit der metallischen Oberfläche, an der die Befestigungsfläche (4.2) des Halteabschnitts (4) zur Anlage bringbar ist.

2. Schallschutzsystem nach Anspruch 1, **dadurch gekennzeichnet, dass** eine Längsachse (3.6) des Schaftes (3) jedes Befestigungsmittels (1) senkrecht zu einer Oberfläche (2.1) des Schallabsorbers (2) verläuft.

3. Schallschutzsystem nach Anspruch 1 oder 2, **dadurch gekennzeichnet, dass** der Schaft (3) zumindest abschnittsweise eine Verankerungsstruktur (3.3) aufweist.

4. Schallschutzsystem nach Anspruch 3, **dadurch gekennzeichnet, dass** die Verankerungsstruktur (3.3) mindestens eine in den Umfang des Schafts (3) eingebrachte Vertiefung umfasst.

5. Schallschutzsystem nach Anspruch 3, **dadurch gekennzeichnet, dass** die Verankerungsstruktur (3.3) mindestens einen den Schaft umgebende Ringwulst (3.5) umfasst.

6. Schallschutzsystem nach Anspruch 3, **dadurch gekennzeichnet, dass** die Verankerungsstruktur (3.3) als Sägezahnstruktur (3.4) in den Schaft (3) eingebracht ist.

7. Schallschutzsystem nach einem der Ansprüche 1 bis 6, **dadurch gekennzeichnet, dass** der Klebstoffauftrag einen Haftklebstoff oder einen Schmelzklebstoff umfasst.

8. Schallschutzsystem nach einem der Ansprüche 1 bis 7 **dadurch gekennzeichnet, dass** die Längserstreckung des Schafts (3) größer als die Längserstreckung des Halteabschnitts (4) ist.

9. Schallschutzsystem nach einem der Ansprüche 1 bis 8, **dadurch gekennzeichnet, dass** der Schaft (3) eine Mindestlänge von 30 mm aufweist.

10. Schallschutzsystem nach einem der Ansprüche 1 - 9, **dadurch gekennzeichnet, dass** die Platte (7) für eine Befestigung an einer nicht metallischen Oberfläche mittels einer Schraubverbindung (9) eingerichtet ist.

## Claims

1. A sound insulation system comprising a
- sound absorber (2) made of cellular elastomeric foam material and
- at least one fastening means (1) for suspending the sound absorber (2) made of cellular elastomeric foam material, wherein
- each fastening means (1) has a shaft (3) which is designed to anchor the fastening means (1) in the cellular elastomeric foam material of the sound absorber (2),
- the shaft (3) tapers at one end towards a driving-in tip (3.1) and the opening angle of the cone surrounding the driving-in tip (3.1) is an acute angle,
- at least a partial region of the shaft (3) is provided with an adhesive application,
- the fastening means (1) has a holding section (4) for fastening the sound absorber (2) to a metallic surface, which is arranged at the other end (3.2) of the shaft (3),
- the holding section (4) has a stop surface (4.1) which can be brought to bear against the surface (2.1) of the sound absorber (2),
- the holding section (4) has a fastening surface (4.2) which can be brought to bear against a metallic surface and at least one part of the holding section (4) having the fastening surface (4.2) is configured as a permanent magnet (6),
- the shaft (3) for anchoring the fastening means (1) in the cellular elastomeric foam material of the sound absorber (2) is introduced so far that the stop surface (4.1) of the holding section (4) bears against the surface (2.1) of the sound absorber (2),
- a plate (7) with the metallic surface against which the fastening surface (4.2) of the holding section (4) can be brought to bear.

2. The sound insulation system according to Claim 1, **characterized in that** a longitudinal axis (3.6) of the shaft (3) of each fastening means (1) runs perpendicular to a surface (2.1) of the sound absorber (2).

3. The sound insulation system according to Claim 1 or 2, **characterized in that** the shaft (3) has an anchoring structure (3.3) at least in sections.

4. The sound insulation system according to Claim 3, **characterized in that** the anchoring structure (3.3) comprises at least one recess provided in the circumference of the shaft (3).

5. The sound insulation system according to Claim 3, **characterized in that** the anchoring structure (3.3) comprises at least one annular bead (3.5) surrounding the shaft.

6. The sound insulation system according to Claim 3, **characterized in that** the anchoring structure (3.3) is introduced into the shaft (3) as a sawtooth structure (3.4).

7. The sound insulation system according to any one of Claims 1 to 6, **characterized in that** the adhesive application comprises a pressure-sensitive adhesive or a hot melt adhesive.

8. The sound insulation system according to any one of Claims 1 to 7, **characterized in that** the longitudinal extent of the shaft (3) is greater than the longitudinal extent of the holding section (4).

9. The sound insulation system according to any one of Claims 1 to 8, **characterized in that** the shaft (3) has a minimum length of 30 mm.

10. The sound insulation system according to any one of Claims 1-9, **characterized in that** the plate (7) is designed for fastening to a non-metallic surface by means of a screw connection (9).

## Revendications

1. Système d'insonorisation, comprenant un
- amortisseur de son (2) en un mousse élastomère alvéolaire,
- au moins un moyen de fixation (1), destiné à accrocher l'amortisseur de son (2) en un mousse élastomère alvéolaire,
- chaque moyen de fixation (1) comportant une tige (3) qui est configurée pour l'ancrage du moyen de fixation (1) dans la mousse élastomère alvéolaire de l'amortisseur de son (2),
- la tige (3) se rétrécissant sur une extrémité dans la direction d'une pointe d'enfoncement (3.1) et l'angle d'ouverture du cône comprenant la pointe d'enfoncement (3.1) étant un angle aigu,
- au moins une zone partielle de la tige (3) étant munie d'une application d'agent adhésif,
- le moyen de fixation (1) comportant un segment de maintien (4) pour la fixation de l'amortisseur de son (2) sur une surface métallique, qui est placé sur l'autre extrémité (3.2) de la tige (3),
- le segment de maintien (4) comportant une surface de butée (4.1), qui peut être amenée en appui sur la surface (2.1) de l'amortisseur de son (2),
- le segment de maintien (4) comportant une surface de fixation (4.2), qui peut être amenée en appui sur la surface métallique et au moins une partie du segment de maintien (4) comportant la surface de fixation (4.2) étant conçue sous la forme d'un aimant permanent (6),
- pour l'ancrage du moyen de fixation (1), la tige (3) étant introduite dans la mousse élastomère alvéolaire de l'amortisseur de son (2) aussi loin pour que la surface de butée (4.1) du segment de maintien (4) soit en appui sur la surface (2.1) de l'amortisseur de son (2),
- une plaque (7) dotée de la surface métallique sur laquelle la surface de fixation (4.2) du segment de maintien (4) peut être amenée en appui.

2. Système d'insonorisation selon la revendication 1, **caractérisé en ce qu'**un axe longitudinal (3.6) de la tige (3) de chaque moyen de fixation (1) s'étend à la perpendiculaire d'une surface (2.1) de l'amortisseur de son (2).

3. Système d'insonorisation selon la revendication 1 ou 2, **caractérisé en ce que** la tige (3) comporte au moins par endroits une structure d'ancrage (3.3).

4. Système d'insonorisation selon la revendication 3, **caractérisé en ce que** la structure d'ancrage (3.3) comprend au moins un renfoncement, ménagé dans la circonférence de la tige (3).

5. Système d'insonorisation selon la revendication 3, **caractérisé en ce que** la structure d'ancrage (3.3) comprend au moins un bourrelet annulaire (3.5) entourant la tige.

6. Système d'insonorisation selon la revendication 3, **caractérisé en ce que** la structure d'ancrage (3.3) est ménagée dans la tige (3) en tant que structure en dents de scie (3.4).

7. Système d'insonorisation selon l'une quelconque des revendications 1 à 6, **caractérisé en ce que** l'application d'agent adhésif comprend un adhésif sensible à la pression ou un adhésif thermofusible.

8. Système d'insonorisation selon l'une quelconque des revendications 1 à 7, **caractérisé en ce que** l'extension longitudinale de la tige (3) est supérieure à l'extension longitudinale du segment de maintien (4).

9. Système d'insonorisation selon l'une quelconque des revendications 1 à 8, **caractérisé en ce que** la tige (3) présente une longueur minimale de 30 mm.

10. Système d'insonorisation selon l'une quelconque des revendications 1 à 9, **caractérisé en ce que** la plaque (7) est configurée pour être fixée sur une surface non métallique au moyen d'un assemblage vissé (9).
